# FASCICULE DE BREVET EUROPEEN

(11) **EP 1 485 608 B1**
(45) Date de publication et mention de la délivrance du brevet: **04.01.2006**
(21) Numéro de dépôt: 03744403.1
(22) Date de dépôt: 17.03.2003
(51) Int. Cl.: F02M 55/00, F16L 41/08

(54) **DISPOSITIF DE MONTAGE D UN TUYAU PRESSION ET UNE RAMPE COMMU NE D ALIMENTATION EN CARBURANT**
VORRICHTUNG ZUR MONTAGE EINES DRUCKSCHLAUCHS UND EINES COMMON RAILS FÜR KRAFTSTOFF
DEVICE FOR ASSEMBLING A PRESSURE HOSE AND A COMMON FUEL RAIL

(30) Priorité: 15.03.2002 FR 0203243
(43) Date de publication de la demande: 15.12.2004
(73) Titulaire: Renault s.a.s., 92100 Boulogne Billancourt (FR)
(72) Inventeur: VIOLANTE, Philippe, F-77290 Mitry Mory (FR); GABILLARD, Samuel, F-76100 Rouen (FR)
(86) Numéro de dépôt international: PCT/FR2003/000838
(87) Numéro de publication internationale: WO 2003/078827

(56) Documents cités:
- US-A- 1 058 542
- US-A- 5 120 084
- US-A- 5 529 349
- US-A- 6 045 162
- US-A1- 2002 195 819
- US-A1- 2003 047 945

## Description

La présente invention concerne un dispositif de montage entre un tuyau haute pression et une rampe commune, communément appelée common rail d'un moteur diesel. Le tuyau haute pression permet soit de connecteur un injecteur haute pression sur la rampe commune afin de l'alimenter en carburant, soit de connecter la rampe à une pompe haute pression afin d'alimenter la rampe en carburant sous pression.

Sont concernés par l'invention, des tuyaux reliant directement un injecteur à une pompe d'injection, et des tuyaux reliant une rampe commune à des injecteurs ou à une pompe d'injection.

Cette invention concerne le montage des tuyaux d'injection sur des supports individuels, ou sur un support commun, tel qu'une rampe d'alimentation commune.

Le problème.sur lequel elle repose est celui de l'étanchéité de la liaison entre un tuyau d'injection et un support relié à une source d'alimentation en carburant sous pression.

Selon l'état de la technique connue dans le domaine, les tuyaux d'injection présentent à une de leurs extrémités une partie élargie, ou tête, retenue à l'intérieur d'un écrou de serrage, qui maintient celle-ci en appui sur son support. L'étanchéité de la liaison est en principe assuré au niveau des surfaces de contact entre la tête du tuyau et le support, grâce à l'effort de serrage appliqué par l'écrou. Le document US-A-6045162 décrit un dispositif de montage selon le préambule de la revendication 1.

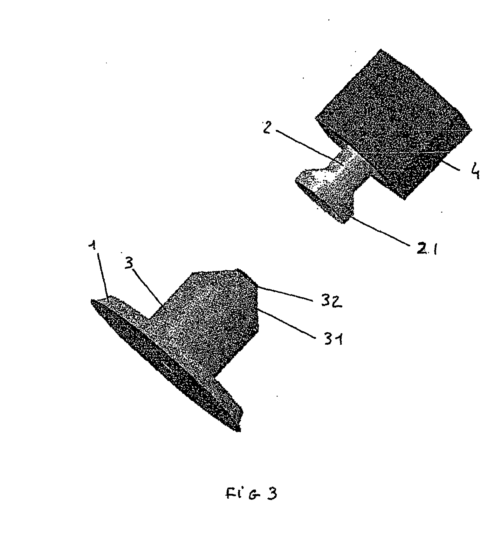

La géométrie actuelle de la connexion entre un tuyau haute pression et la rampe est représentée à la figure 4. La rampe 102 comprend essentielle un conduit principal 120 présentant un canal central constituant la réserve de carburant. Le canal central comprend des dérivations 121 radiales qui débouchent vers l'extérieur du conduit principal. Ces dérivations se prolongent vers l'extérieur en saillie du conduit principal et forme une tête 123 de connexion sensiblement cylindrique. L'extrémité de cette tête de connexion comprend une cavité 124 de forme sensiblement tronconique formant un siège récepteur du tuyau 101 haute pression. La surface extérieure de la tête de connexion est filetée. L'extrémité 110 du tuyau haute pression destinée à venir en contact avec le siège est en général en forme d'olive. Ainsi, le contact 115 entre le siège de la tête de connexion et le tuyau 101 haute pression est linéique ce qui nécessaire pour assurer l'étanchéité. La fixation du tuyau 101 haute pression sur la tête 123 de connexion est réalisée par une bague 103 dont la tête comprend un perçage 130 interdisant le passage de l'extrémité 110 en forme d'olive du tuyau 101 haute pression. Le serrage de la bague 103 sur le filetage de la tête 123 de connexion permet d'atteindre un bon niveau d'étanchéité.

Cette bague facilite le montage du tuyau sur son support, en assurant l'alignement axial de ces deux éléments, lors du serrage de l'écrou. Toutefois, son effet sur la qualité de la liaison reste limité, dans la mesure où la bague n'intervient pas directement sur la géométrie ni sur la disposition relative des surfaces d'étanchéité.

La présente invention a pour but de fournir un dispositif de montage entre un tuyau haute pression et une rampe commune d'alimentation en carburant dont l'étanchéité est maintenu même pour des pressions élevées.

Ce but est atteint par un dispositif de montage entre un tuyau haute pression et une rampe commune d'alimentation en carburant, le tuyau comprenant un canal d'alimentation dont l'axe correspondant sensiblement à l'axe du canal d'une tête de connexion de la rampe commune, caractérisé en ce que l'extrémité de la tête de connexion comprend une protubérance comprenant un bourrelet annulaire assurant un contact linéique avec le tuyau haute pression.

D'autres particularités et avantages de la présente invention apparaîtront plus clairement dans la description ci-après faite en référence aux dessins annexés dans lesquels:
la figure 1 représente une vue en coupe longitudinal d'une connexion entre une rampe commune et un tuyau haute pression selon l'invention,
la figure 2 représente une vue de détails du contact entre le tuyau et la rampe,
la figure 3 représente une vue en perspective éclatée du dispositif selon l'invention,
la figure 4 représente une vue en coupe longitudinal d'une connexion entre une rampe commune et un tuyau haute pression selon l'art antérieur,

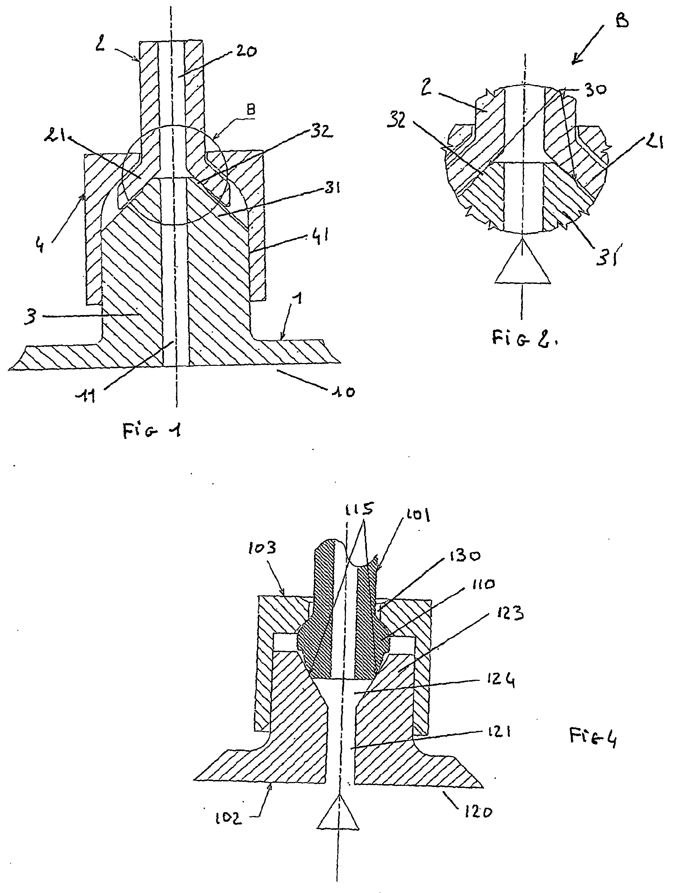

L'invention va à présent être décrite en référence aux figures 1 à 3.

Sur la figure 1, on a représenté en coupe transversale une rampe commune d'alimentation en carburant sous pression 1, reliée à une pompe (non représentée). L'intérieur de la rampe 1 est en communication avec un tuyau d'injection 2 relié à un injecteur (non représenté). Toutefois, le dispositif selon l'invention peut également être utilisé pour le tuyau haute pression reliant la rampe commune à la pompe à carburant haute pression.

La rampe 1 présente dans le plan de coupe un embout ou tête de connexion 3 intégré à celle-ci. Les surfaces d'appui ou de contact 30 de la tête de connexion 3 sont portées par une protubérance 31 de celle-ci.

La protubérance 31 de la tête 3 de connexion, est en appui contre une partie 21 évasée du tuyau 2, et retenue à l'intérieur d'un élément de serrage 4, vissé à l'extérieur de la tête 3 de connexion. La partie évasée 21 de l'extrémité du tuyau est de forme sensiblement complémentaire à la forme de la protubérance. La surface de contact 32 entre le tuyau 2 et la tête de connexion 3 est réalisé sur la paroi intérieure du canal 20 d'alimentation du tuyau 2 haute pression. Compte pour l'art antérieur, lors du montage du tuyau 2 haute pression sur a rampe 1 commune il est veillé à ce que l'axe du tuyau 2 soit confondu avec l'axe du canal de dérivation de la tête 3 de connexion.

La partie 21 évasée du tuyau présente des surfaces 30 de contact avec la protubérance 3, assurant l'étanchéité de la liaison sous l'effort de serrage de l'élément 4. Selon l'invention, cette surface 30 de contact est linéique.

Selon le mode de réalisation de l'invention présenté, la surface 30 de contact est porté par un bourrelet 32 annulaire formé sur la protubérance 31 de la tête de connexion. Le bourrelet 32 annulaire a, par exemple, une section demi-sphérique.

Cette disposition permet d'introduire un degré de liberté dans le montage du tuyau 2 sur son support, qui n'exige pas un alignement axial parfait de ces deux éléments pour garantir l'étanchéité de la liaison comme dans les systèmes de montage actuels.

Le dispositif, de montage proposé tolère en effet un défaut d'axialité entre le tuyau et son support, car les surfaces 32 de d'appui entre le bourrelet et l'extrémité du tuyau 2, assurent le centrage du tuyau sur son support lors du serrage.

L'extrémité du tuyau 2 jouant le rôle d'une rotule sur la protubérance de la tête 3 de connexion, permet à l'écrou 4 d'exercer toujours son effort de serrage parallèlement à la tête 3 de connexion, en dépit d'un éventuel défaut d'alignement du tuyau sur la tête 3 de connexion, de façon à avoir toujours une pression de contact uniforme entre le tuyau et la tête 3 de connexion, qui est garante de l'étanchéité de la liaison.

De plus, compte tenu de la géométrie de la zone de contact entre le tuyau 2 et la tête 3 de connexion il ne se crée pas d'accumulation de pression au niveau de la surface 32 de contact contrairement au système de l'art antérieur. Dans l'art antérieur, la surface de contact 115 se trouve directement sollicitée par la fluide sous pression. De plus, la tête 110 élargie du tuyau offre une surface importante contre le sens de circulation du fluide ce qui augmente la contrainte exercée sur la surface 115 de contact. Selon l'invention, la surface de contact 32 n'est pas directement sollicité par le fluide sous pression et l'extrémité du tuyau 2 ne forme pas de surface contre la circulation du fluide.

Selon l'exemple de réalisation représenté aux figures 1 à 3, la protubérance 31 de la tête 3 de connexion est de forme générale tronconique et le bourrelet 32 annulaire est disposé par exemple sensiblement au sommet du tronc de cône. L'axe du tronc de cône est sensiblement confondu avec l'axe du canal 11 de dérivation formé dans la tête 3 de connexion.

La forme évasée de l'extrémité 21 du tuyau 2 autre pression est obtenue, par exemple, en augmentant progressivement le diamètre du canai 20 d'alimentation de façon à obtenir par exemple une forme générale en tronc de cône du canal, complémentaire de la forme en tronc de cône de la protubérance 31 de la tête 3 de connexion.

De même, l'élément de serrage 4 est conformé pour présenter une surface de contact avec la partie 21 évasée du tuyau 2 complémentaire de cette dernière.

## Revendications

1. Dispositif de montage entre un tuyau (2) haute pression et une rampe (1) commune d'alimentation en carburant, le tuyau comprenant un canal (20) d'alimentation dont l'axe correspondant sensiblement à l'axe du canal d'une tête (3) de connexion de la rampe (1) commune, **caractérisé en ce que** l'extrémité de la tête (3) de connexion comprend une protubérance (31) comprenant un bourrelet (32) annulaire assurant un contact (15) linéique avec le tuyau (2) haute pression.

2. Dispositif de montage selon la revendication 1 dans lequel l'extrémité du tuyau (2) haute pression a une forme évasée complémentaire de la forme de la protubérance (31) de sorte que le contact linéique (15) soit établi sur la surface intérieure du canal (20) du tuyau (2).

3. Dispositif de montage selon la revendication 1 ou 2 dans lequel la protubérance (31) est de forme générale tronconique.

4. Dispositif de montage selon l'une des revendications 1 à 3 dans lequel le bourrelet (32) annulaire de section demi-sphérique.

5. Dispositif de montage selon l'une des revendications 1 à 4 dans lequel le bourrelet (32) annulaire est disposé à l'extrémité de la protubérance (31).

## Patentansprüche

1. Vorrichtung zur Montage zwischen einer Hochdruckleitung (2) und einem Common Rail (1) zur Kraftstoffversorgung, wobei die Leitung einen Versorgungskanal (20) aufweist, dessen Achse im Wesentlichen der Achse des Kanals eines Verbindungskopfs (3) des Common Rails (1) entspricht, **dadurch gekennzeichnet, dass** das Ende des Verbindungskopfs (3) eine Ausstülpung (31) aufweist, welche einen ringförmigen Wulst (32) aufweist, der einen linearen Kontakt (15) mit der Hochdruckleitung (2) sicherstellt.

2. Vorrichtung zur Montage nach Anspruch 1, bei welcher das Ende der Hochdruckleitung (2) eine komplementär erweiterte Form zu der Form der Ausstülpung (31) derart aufweist, dass der lineare Kontakt (15) an der inneren Oberfläche des Kanals (20) der Leitung (2) hergestellt wird.

3. Vorrichtung zur Montage nach Anspruch 1 oder 2, bei welcher die Ausstülpung (31) von einer im Allgemeinen kegelstumpfförmigen Form ist.

4. Vorrichtung zur Montage nach einem der Ansprüche 1 bis 3, bei welcher der ringförmige Wulst (32) von einem halbkugelförmigen Querschnitt ist.

5. Vorrichtung zur Montage nach einem der Ansprüche 1 bis 4, bei welcher der ringförmige Wulst (32) an dem Ende der Ausstülpung (31) angeordnet ist.

## Claims

1. An assembly device between a high-pressure tube (2) and a common fuel supply manifold (1), the tube comprising a supply duct (20) whose axis corresponds substantially to the axis of the duct of a connection head (3) of the common manifold (1), **characterised in that** the end of the connection head (3) comprises a projection (31) comprising an annular flange (32) ensuring a linear contact (15) with the high-pressure tube (2).

2. An assembly device as claimed in claim 1, in which the end of the high-pressure tube (2) has a flared shape complementary with the shape of the projection (31) so that the linear contact (15) is established with respect to the inner surface of the duct (20) of the tube (2).

3. An assembly device as claimed in claim 1 or 2, in which the projection (31) has a general frustoconical shape

4. An assembly device as claimed in one of claims 1 to 3, in which the annular flange (32) is of hemispherical section.

5. An assembly device as claimed in one of claims 1 to 4, in which the annular flange (32) is disposed at the end of the projection (31).
